# EUROPÄISCHE PATENTSCHRIFT

(11) **EP 3 068 911 B1**
(45) Veröffentlichungstag und Bekanntmachung des Hinweises auf die Patenterteilung: **30.10.2019**
(21) Anmeldenummer: 14825085.5
(22) Anmeldetag: 13.11.2014
(51) Int. Cl.: C21D 11/00, C21D 1/09, C21D 1/18, C21D 9/00, B23K 26/00

(54) **IN-LINE VERFAHREN UND IN-LINE FERTIGUNGSANLAGE**
IN-LINE METHOD AND IN-LINE PRODUCTION PLANT
PROCÉDÉ EN LIGNE ET INSTALLATION DE PRODUCTION EN LIGNE

(30) Priorität: 15.11.2013 AT 507612013
(43) Veröffentlichungstag der Anmeldung: 21.09.2016
(73) Patentinhaber: STIWA Holding GmbH, 4800 Attnang-Puchheim (AT)
(72) Erfinder: GRAUSGRUBER, Klaus, A-4691 Breitenschützing (AT); THALER, Michael, A-4840 Vöcklabruck (AT)
(74) Vertreter: Burger, Hannes
(86) Internationale Anmeldenummer: PCT/AT2014/050272
(87) Internationale Veröffentlichungsnummer: WO 2015/070272

(56) Entgegenhaltungen:
- EP-A1- 2 138 719
- DE-A1- 3 908 562

## Beschreibung

Die Erfindung betrifft ein In-Line Verfahren zur Fertigung von Werkstücken oder Baugruppen, bei dem Werkstücke oder Baugruppen mittels einer Fördereinrichtung mehrere aufeinanderfolgende Arbeitsstationen durchlaufen, mit einem in einer der Arbeitsstationen durchgeführten Härteschritt, bei dem zumindest ein Bereich des Werkstückes oder der Baugruppe mittels einer Lasereinrichtung, insbesondere eines Lasers mit programmierbarer Fokussieroptik (PFO) oder eines Linienlasers, durch Applikation zumindest einer Laserhärtespur gehärtet wird, sowie eine entsprechende In-Line Fertigungsanlage.

In-Line Verfahren sind hoch automatisierte Prozesse, bei denen Werkstücke oder Baugruppen nacheinander eine Mehrzahl an Arbeitsstationen durchlaufen. Es kann sich dabei um kontinuierliche bzw. getaktete Prozesse handeln, die vollautomatisiert ablaufen und den Eingriff einer Bedienperson nur im Falle einer Störung erfordern. In-Line Prozesse zeichnen sich durch eine hohe Fertigungsquote und im Wesentlichen konstante Bearbeitungsqualität aus.

Auf anderem Gebiet des Standes der Stande der Technik sind Lösungen für das Härten von Werkstücken bekannt. Beispielhaft wird dazu auf folgende Druckschriften verwiesen: DE10330068A1, DE3718647C1 sowie der Bericht von J. Aichinger und D. Schuöcker: "Erhöhung der Biegesteifigkeit von Baustahl S235 (ST37) durch selektives Härten mit Diodenlaser" (Fachlicher Bericht über die Subvention 2009). Im Stand der Technik stellt das Laserhärten jeweils ein von anderen Bearbeitungsschritten losgelöstes Verfahren dar.

Die EP2138719A1 offenbart ein Verfahren zur Herstellung einer Taumelscheibenpumpe, bei dem eine Oberflächenhärtung durch Laserstrahlen erfolgt.

Der Artikel "Laser beam hardening - Manufacturing integration enables streamlined processes", Fraunhofer IWS Annual report 2007, Seite 30, offenbart eine Anlage zur Herstellung von Turboladerwellen für Nutzfahrzeuge. Diese werden im Bereich der Lagerstellen partiell mit dem Laser gehärtet. Die Härtestation ist in einer Fertigungszelle für Turboladerwellen angeordnet.

In-Line Verfahren gemäß dem Stand der Technik beziehen sich meist auf eine beschränkte Abfolge von Bearbeitungsschritten, sind aber nicht in der Lage ein Werkstück von Grund auf zu fertigen. Wichtige Bearbeitungsschritte müssen daher bereits abgeschlossen sein, bevor das Werkstück dem In-Line Prozess überhaupt zugeführt werden kann. Dadurch wird einerseits die Gesamt-Bearbeitungszeit der Werkstücke sehr lang, andererseits der Raumbedarf, um ein Werkstück mehreren aufeinanderfolgenden Bearbeitungsschritten zu unterziehen, sehr hoch.

Die Erfindung setzt sich zum Ziel diese Nachteile zu beseitigen und ein In-Line Verfahren bereitzustellen, mit dem nicht nur die Bearbeitungsmöglichkeiten erweitert, sondern auch die Bearbeitungszeiten stark verkürzt werden können. Es sollen die Zuverlässigkeit und Qualität der Bearbeitung gewährleistet sein, wie auch eine Reduktion der Fertigungskosten erzielt werden.

Dieses Ziel wird mit einem In-Line Verfahren der eingangs genannten Art erreicht durch einen Kompensationsschritt, bei dem zur Kompensation des durch die Laserhärtung bewirkten oder zu erwartenden Verzuges die Applikation zumindest einer weiteren Laserhärtespur an anderer Stelle des Werkstückes oder der Baugruppe erfolgt, wobei der Härteschritt und der Kompensationsschritt in derselben Arbeitsstation durchgeführt werden.

Die Kombination bzw. Integration eines durch Applikation zumindest einer Laserhärtespur erfolgenden Härteschrittes mit einem In-Line Verfahren ermöglicht eine starke Reduzierung der Taktzeiten. Zudem ist es nicht mehr erforderlich, das Werkstück gesondert vom In-Line Prozess zu härten, was eine Reduktion des Aufwandes sowie eine Platzersparnis mit sich bringt. Auch die (Zwischen)Lagerung von gehärteten Werkstücken vor ihrer weiteren Bearbeitung entfällt. Ein wesentlicher Vorteil besteht in der Reduktion des Energieverbrauches, der sich einerseits aus dem gezielten Härten nur bestimmter Bereich ergibt, andererseits durch die Integration in das In-Line Verfahren.

Unter In-Line Verfahren wird ein automatisiertes Verfahren verstanden, bei dem Werkstücke oder Baugruppen nacheinander eine Mehrzahl von Arbeitsstationen durchlaufen und in diesen einer Bearbeitung und/oder einer Prüfung unterzogen werden. Ein In-Line Verfahren entspricht im Wesentlichen einer vollautomatisierten Fertigungsstraße, bei der auch der Transport der Werkstücke automatisiert ist. Die Fördereinrichtung(en), mit der(denen) die Werkstücke von einer Arbeitsstation zur nächsten gefördert werden, werden ebenso wie auch die Bearbeitungsvorgänge in den einzelnen Arbeitsstationen von einer Steuereinrichtung gesteuert.

Die Erfindung zeichnet sich durch einen Kompensationsschritt aus, bei dem zur Kompensation des durch die Laserhärtung bewirkten oder zu erwartenden Verzuges die Applikation zumindest einer weiteren Laserhärtespur an anderer Stelle des Werkstückes oder der Baugruppe erfolgt. Durch die Kompensationshärtespur(en) erfolgt eine Streckung des Werkstückes in Gegenrichtung, wodurch der Verzug nachträglich kompensiert oder bei gleichzeitiger Applikation gar nicht erst auftritt. Aufgrund dieser Maßnahme ist es zur Kompensation des Verzuges nicht mehr erforderlich mechanische Nachbearbeitungsschritte, z.B. Fräsen, Erodieren, etc., oder einen Richtvorgang (z.B. durch Hämmern) durchzuführen. Die Soll-Geometrie des Werkstückes wird durch die kompensierende(n) Laserhärtespur(en) auf einfache und zeitsparende Weise wieder hergestellt. Die Kompensation kann durch eine einzige oder durch mehrere verteilt angeordnete Härtespuren erfolgen. Die Kompensationshärtespuren können auf der der eigentlichen Härtespur des Härteschrittes abgewandten bzw. gegenüberliegenden Seiten des Werkstückes appliziert werden.

Die Erfindung zeichnet sich dadurch aus, dass der Härteschritt und der Kompensationsschritt in derselben Arbeitsstation durchgeführt werden. Dadurch können die Taktzeiten weiter reduziert werden. Die In-Line Fertigungsanlage wird vereinfacht, benötigt weniger Raum und wird kostengünstiger.

Im Zusammenhang mit dem In-Line Verfahren kann der Kompensationsschritt in derselben Arbeitsstation (Modul) mit demselben oder einer anderen Lasereinrichtung (Laserkopf) in die geometrische Soll-Ausgangslage zurückgerichtet werden. Es ist auch denkbar, dass der Kompensationsschritt zeitgleich mit dem Härteschritt erfolgt.

Eine bevorzugte Ausführung zeichnet sich dadurch aus, dass während und/oder nach der Applikation der zumindest einen Laserhärtespur die Gebrauchshärte eines Bereiches des Werkstückes oder der Baugruppe durch Steuerung der Lasereinrichtung eingestellt wird.

Die Einstellung der Gebrauchshärte kann durch gezielte Parameterwahl, insbesondere durch eine Variation der Laserleistung, während der Applikation der Laserhärtespur oder in einem (unmittelbar) nachfolgenden, zumindest zeitlich abgehobenen Vorgang (Anlassschritt), der die Applikation weiterer Laserhärtespuren umfassen kann, erfolgen. Im ersteren Fall ist es vorstellbar, dass die Laserleistung ständig variiert von einem Niveau, das fürs Härten erforderlich ist, auf ein Niveau, das für das Anlassen erforderlich ist. Der Anlassschritt ist in diesem Fall im Härteschritt integriert. Daraus ergibt sich, dass eine erste Stelle (Punkt, Spot) des Werkstückes bereits gehärtet und angelassen ist, während eine benachbarte zweite Stelle noch nicht gehärtet oder mit der Laserstrahlung in Kontakt gekommen ist.

Die Gebrauchshärte stellt bereits jene Härte dar, die der gefertigte Gegenstand bei seiner Verwendung aufweist. Die gewünschte Härte bzw. der Härteverlauf im Werkstück (Eindringtiefe, Härteparameter, z.B. 60 HRC) kann beim Härten von (z.B. härtbaren Stählen) über variabel der Kontur folgende Abstände, Winkel, Laserleistung, Vorschubgeschwindigkeit des Laserkopfes mit verschiedensten Optikausführungen erzielt werden.

Zum gleichen Zeitpunkt kann auch die Gebrauchshärte eingestellt werden. Alternativ kann durch zeitlich nachfolgendes Vergüten die Härte des Werkstoffes eingestellt werden, was einer dem Härteprozess nachgeschalteten Anlassbehandlung gleichkommt. Das Anlassen verbessert Bauteileigenschaften (z.B. Zähigkeit von Zähnen einer Zahnstange) durch Entspannung des spröden, martensitischen Härtegefüges innerhalb des Materials. Des Weiteren werden durch den graduellen Härteverlauf von außen nach innen die Bauteileigenschaften positiv beeinflusst.

Eine bevorzugte Ausführung zeichnet sich dadurch aus, dass die Gebrauchshärte eines Bereiches des Werkstückes oder der Baugruppe durch einen gesonderten Anlassschritt eingestellt wird, wobei der Anlassschritt und der Härteschritt in derselben Arbeitsstation durchgeführt werden.

Eine bevorzugte Ausführung zeichnet sich dadurch aus, dass die Applikation zumindest einer Laserhärtespur gemäß dem Härteschritt und die Applikation der zumindest einen weiteren Laserhärtespur gemäß dem Kompensationsschritt jeweils durch Bewegen eines Laserspots entlang einer vorgegebenen Spur erfolgt, wobei die Bewegungsrichtung des Laserspots während des Härteschrittes und die Bewegungsrichtung des Laserspots während des Kompensationsschrittes gegenläufig sind. Durch diese Maßnahme wird weitere Bearbeitungszeit eingespart, da der Laser nicht in seine Ausgangsstellung zurückgeführt werden muss, bevor er mit dem Kompensationsschritt beginnen kann.

Eine bevorzugte Ausführung zeichnet sich dadurch aus, dass das Werkstück oder die Baugruppe und die Lasereinrichtung zwischen dem Härteschritt und dem Kompensationsschritt relativ zueinander bewegt, vorzugsweise um zumindest eine Drehachse gedreht, werden. Diese Maßnahme ermöglicht einerseits die Verwendung derselben Lasereinrichtung für den Härteschritt und für den Kompensationsschritt und vereinfacht auch die Applikation mehrerer Härtespuren, die an unterschiedlichen Stellen des Werkstückes liegen. Es kann dabei die Lasereinrichtung stationär sein und das Werkstück bzw. die Baugruppe wird bewegt, insbesondere um zumindest eine Achse gedreht, oder das Werkstück bzw. die Baugruppe bleibt stationär und die Lasereinrichtung wird bewegt. Im ersteren Fall kann eine Halteeinrichtung als Teil der Bewegungseinheit mit einem Greifer oder Klemmen das Werkstück bzw. die Baugruppe halten. Greifer oder Klemmen werden dann zusammen mit dem Werkstück um eine entsprechende Drehachse rotiert. Das Werkstück kann um z.B. um etwa 180° gedreht werden, sodass die kompensierende Härtespur an der gegenüberliegenden Seite appliziert werden kann. Andere Drehwinkel sind selbstverständlich möglich, vor allem wenn mehrere Spuren in jeweils unterschiedlichen Drehpositionen appliziert werden sollen.

Eine bevorzugte Ausführung zeichnet sich dadurch aus, dass in einer der die Laserhärtung durchführenden Arbeitsstation nachfolgenden Arbeitsstation eine mechanische Bearbeitung des Werkstückes, insbesondere Ablängen und/oder Fräsen, durchgeführt wird. Dadurch kann eine komplette Bearbeitungsfolge umfassend eine thermische (Härten, Kompensation und/oder Anlassen), und mechanische Bearbeitung bereitgestellt werden.

Eine bevorzugte Ausführung zeichnet sich dadurch aus, dass die Applikation zumindest einer Laserhärtespur durch eine Steuereinrichtung unter Anwendung von Prozessparametern, insbesondere Vorschubgeschwindigkeit des Laserstrahles, Laserleistung, Abstand zwischen Laserbearbeitungskopf und Werkstück oder Baugruppe, Winkel, unter dem der Laserstrahl auf das Werkstück oder die Baugruppe trifft, erfolgt, wobei vorzugsweise die Prozessparameter in Echtzeit geregelt werden. Dies sichert die Qualität und Reproduzierbarkeit der Bearbeitung und kann von der Steuereinrichtung des In-Line Gesamtprozesses die gesamte Steuerung der Prozessabläufe übernommen werden. Zuzüglich zu den Parametern, wie oben genannt, kann optional oder zusätzlich noch mit weiteren Prozessparametern wie Kühlen des Werkstückes bzw. Bauteils mittels diverser Medien, wie z.B. Luft, Wasser, Öl, etc., eine Unterstützung bzw. Beeinflussung des Prozesses erfolgen. Vorzugsweise werden die Prozessparameter im Zusammenhang mit der Applikation von Laserstrahlung automatisch in Echtzeit geregelt und dem Inline Prozess angepasst.

Beispielsweise kann durch die Vorschubgeschwindigkeit und/oder den Energieeintrag (Laserleistung) die Abkühlphase entlang der Härtespur geregelt werden. Eine hohe Vorschubgeschwindigkeit des Laserspots auf dem Werkstück bewirkt eine hohe Härte des Werkstückbereiches. Eine langsame Vorschubgeschwindigkeit mit hohem Energieeintrag bewirkt eine räumlich ausgedehntere Wärmeverteilung im Werkstück, die dafür sorgt, dass der Zentrumsbereich dieser Wärmeverteilung nur langsam abkühlt, was einem Anlassprozess in diesem konkreten Bereich gleichkommt und zu höherer Zähigkeit führt.

Eine bevorzugte Ausführung zeichnet sich dadurch aus, dass die Prozessparameter in Abhängigkeit von Sensordaten geregelt werden, die durch zumindest einen Sensor in der Arbeitsstation aufgenommen werden. Die Sensoren können beispielsweise das Ausmaß des Härteverzuges (während des Härteschrittes) messen. In Abhängigkeit der Sensoren kann der Kompensationsschritt, insbesondere Lage, Kontur, Breite, Anzahl der Kompensationshärtespuren sowie die dabei applizierte Laserleistung, geplant und durchgeführt werden

Eine bevorzugte Ausführung zeichnet sich dadurch aus, dass der Härteschritt und/oder der Anlassschritt und/oder der Kompensationsschritt unter einer ein- oder mehrteiligen Schutzabdeckung (Prozessabschottung) durchgeführt wird/werden, wobei vorzugsweise zumindest ein Teil der Schutzabdeckung bewegbar ist. Die Schutzabdeckung wird vorzugsweise durch einen Antrieb gesteuert, der mit der Steuereinrichtung des In-Line Fertigungsanlage verbunden und durch diese angesteuert wird. Durch die Schutzabdeckung, z.B. in Form einer Schutzhaube, kann eine definierte Prozessumgebung erzielt werden. So können beispielsweise Temperatur, Luftfeuchte, Lichtverhältnisse je nach Bedarf eingestellt werden. Auch das Einbringen von Prozessgasen in den von der Schutzabdeckung umgebenen Arbeitsbereich wird dadurch möglich. Die bewegliche Ausbildung der Schutzabdeckung oder eines Teiles davon ermöglicht die Förderung des Werkstückes in den Arbeitsbereich der Arbeitsstation bei anschließender optimaler Abschirmung des Arbeitsbereiches durch Bewegen der Schutzabdeckung bzw. eines Teiles davon auch in den Förderweg.

Auch eine Kühleinrichtung, z.B. in Form einer Kühlbrause, mit der ein Kühlmedium (wie Luft, Wasser, etc.) auf, durch oder unter den Bauteil gerichtet werden kann, ist denkbar und in der Härtestation bevorzugt.

Das Ziel wird auch mit einer In-Line Fertigungsanlage zur Fertigung von Werkstücken oder Baugruppen, mit einer Steuereinrichtung, mehreren aufeinanderfolgenden Arbeitsstationen und einer Fördereinrichtung, mit der die Werkstücke oder Baugruppen zwischen den einzelnen Arbeitsstationen förderbar sind, erreicht, wobei eine Arbeitsstation eine Härtestation ist und eine Lasereinrichtung umfasst, die dazu eingerichtet ist, zumindest einen Bereich eines/einer in der Arbeitsstation befindlichen Werkstückes und/oder Baugruppe durch Applikation zumindest einer Laserhärtespur zu härten, und wobei die In-Line Fertigungsanlage ausgebildet ist, um in derselben Arbeitsstation einen Kompensationsschritt durchzuführen, bei dem zur Kompensation des durch die Laserhärtung bewirkten oder zu erwartenden Verzuges die Applikation zumindest einer weiteren Laserhärtespur an anderer Stelle des Werkstückes oder der Baugruppe erfolgt, und dass die Steuereinrichtung zur Durchführung eines In-Line Verfahrens nach einem der oben beschriebenen Ausführungsformen eingerichtet ist.

Eine bevorzugte Ausführung zeichnet sich dadurch aus, dass die Härtestation eine Bewegungseinheit umfasst, die ausgebildet ist, das Werkstück oder die Baugruppe und die Lasereinrichtung relativ zueinander zu bewegen, wobei vorzugsweise die Bewegungseinheit eine Dreheinrichtung mit zumindest einer Drehachse zur relativen Drehung von Werkstück oder Baugruppe und Lasereinrichtung ist. Die Bewegungseinheit kann eine Halteeinrichtung, z.B. zumindest einen Greifer oder Klemmen, umfassen, die das Werkstück oder die Baugruppe während des Bewegungs- bzw. Drehvorgangs hält.

Eine bevorzugte Ausführung zeichnet sich dadurch aus, dass die Drehachse der Dreheinrichtung quer, vorzugsweise im Wesentlichen normal, zur Förderrichtung der Fördereinrichtung im Bereich der Härtestation steht. Dies ermöglicht eine platzsparende Anordnung der Bewegungseinheit (gegebenenfalls samt Halteeinrichtung) außerhalb des Förderweges. Selbstverständlich sind Lösungen mit einer zur Förderrichtung parallelen Drehachse nicht ausgeschlossen. Z.B. kann hier ein Greifer oder Klemmen in den Förderweg fahren, um das Werkstück zu halten.

Eine bevorzugte Ausführung zeichnet sich dadurch aus, dass die Härtestation eine ein- oder mehrteilige Schutzabdeckung für den Arbeitsbereich umfasst, wobei vorzugsweise zumindest ein Teil der Schutzabdeckung bewegbar ist.

Eine bevorzugte Ausführung zeichnet sich dadurch aus, dass eine der Härtestation nachfolgende Arbeitsstation eine mechanische Bearbeitungsstation, insbesondere zum Ablängen und/oder Fräsen des Werkstückes oder der Baugruppe, ist.

Eine bevorzugte Ausführung zeichnet sich dadurch aus, dass die der Härtestation nachfolgenden Arbeitsstationen eine Schweißstation und/oder einer Prüfstation und/oder eine Beschriftungsstation und/oder eine Montagestation und/oder eine Beölungsstation und/oder eine Ausgabestation umfassen.

Das In-Line Verfahren bzw. die In-Line Fertigungsanlage eignet sich insbesondere (aber natürlich nicht nur) für längliche Werkstücke. Die Drehachse, um die das Werkstück zwischen Härte- und Kompensationsschritt gedreht wird, könnte dabei im Wesentlichen parallel zur Längserstreckung des Werkstückes sein, wodurch nur minimaler Raum in der Härtestation erforderlich wäre.

Zum besseren Verständnis der Erfindung wird diese anhand der nachfolgenden Figuren näher erläutert.

Es zeigen jeweils in stark vereinfachter, schematischer Darstellung:
- Fig. 1: eine In-Line Fertigungsanlage in schematischer Darstellung;
- Fig. 2: eine Härtestation im Detail und quer zur Förderrichtung der Fördereinrichtung;
- Fig. 3: ein mögliches Beispiel zur Applikation kompensierender Laserhärtespuren;
- Fig. 4: zwei Beispiele für die Applikationsrichtungen;
- Fig. 5: den Temperaturverlauf an einer Stelle des Werkstückes bei einem Härteschritt unmittelbar gefolgt von einem Anlassschritt;
- Fig. 6: eine Ausführungsform des In-Line-Verfahrens mit parallelen Fertigungslinien.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten des In-Line Verfahrens bzw. der In-Line Fertigungsanlage, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind, innerhalb des Schutzumfangs der Ansprüche.

Der Ordnung halber sei abschließend darauf hingewiesen, dass zum besseren Verständnis des Aufbaus der Erfindung diese bzw. deren Bestandteile teilweise unmaßstäblich und/oder vergrößert und/oder verkleinert dargestellt wurden.

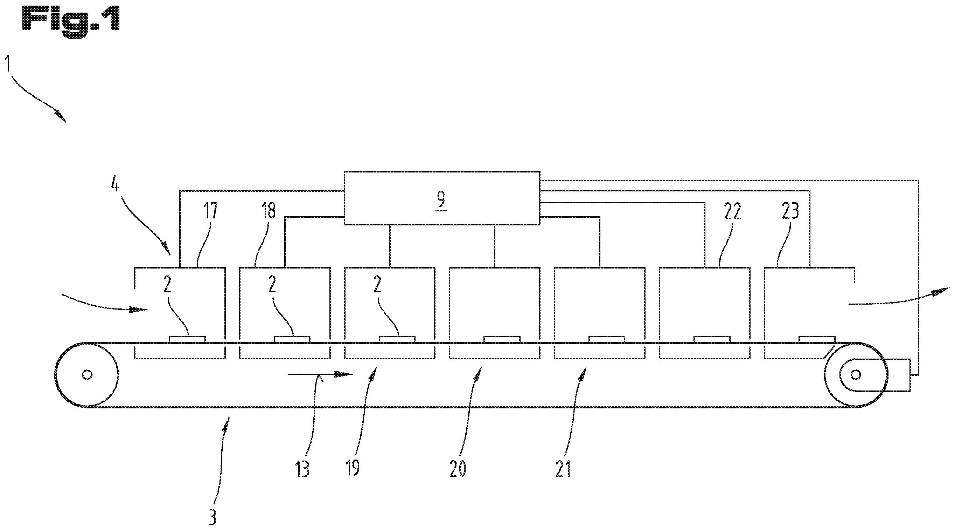

Fig. 1 zeigt eine In-Line Fertigungsanlage 1 zur Fertigung von Werkstücken oder Baugruppen 2, mit einer Steuereinrichtung 9, mehreren aufeinanderfolgenden Arbeitsstationen 4 und einer Fördereinrichtung 3, mit der die Werkstücke oder Baugruppen 2 zwischen den einzelnen Arbeitsstationen 4, 17...23 in einer Förderrichtung 13 gefördert werden. Die Fördereinrichtung 3 kann z.B. in Form eines umlaufenden Bandes oder einer umlaufenden Kette verwirklicht sein.

Die Steuereinrichtung 9 ist zur Durchführung eines In-Line Verfahrens eingerichtet und steuert sowohl die Arbeitsstationen 4 als auch die Fördereinrichtung 3. Der Pfeil zur ersten Arbeitsstation 17 (ganz links) deutet das Bestücken der In-Line Fertigungsanlage 1 an. Der Pfeil von der letzten Arbeitsstation 23 (ganz rechts) deutet die Entnahme der fertigen Teile an.

Eine der Arbeitsstationen 4 ist eine Härtestation 18 und umfasst eine Lasereinrichtung 5, die dazu eingerichtet ist, zumindest einen Bereich eines/einer in der Arbeitsstation befindlichen Werkstückes oder Baugruppe 2 durch Applikation zumindest einer Laserhärtespur 6 zu härten.

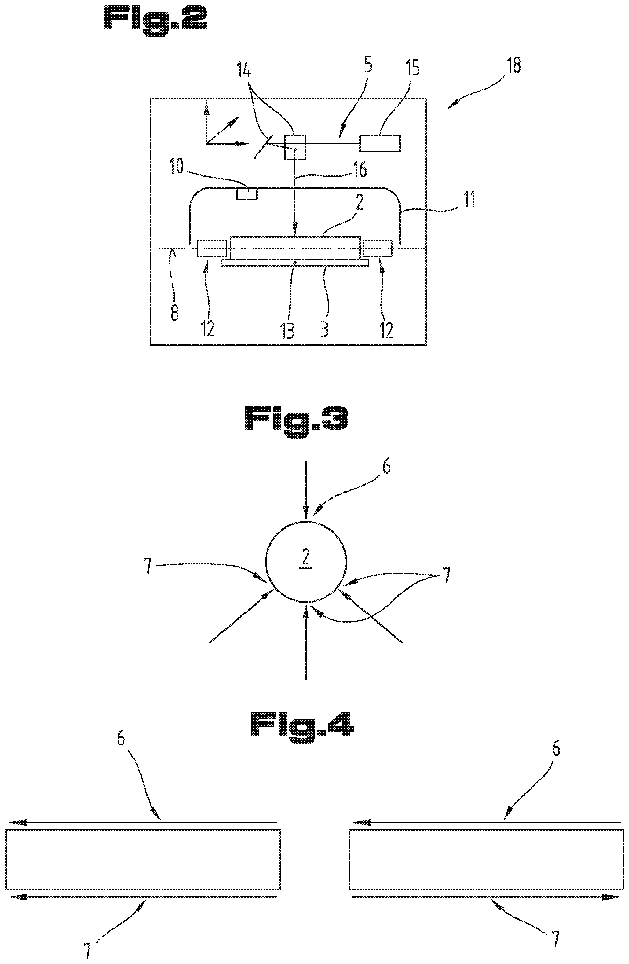

Fig. 2 zeigt die Härtestation 18 im Detail mit einer Lasereinrichtung 5 aus einem Laser 15 und beweglichen (z.B. um drei Raumrichtungen verdrehbaren) Spiegeln 14, die den Laserstrahl 16 umlenken und entlang einer Spur über das Werkstück 2 bewegen (z.B. parallel zur Bildebene der Fig. 2). Derartige Lasereinrichtungen sind auch unter dem Begriff: Laser mit programmierbarer Fokussieroptik (PFO) bekannt. In der bevorzugten Ausführungsform der Fig. 2 umfasst die Härtestation 18 eine Bewegungseinheit 12, die ausgebildet ist, das Werkstück oder die Baugruppe 2 und die Lasereinrichtung 5 relativ zueinander zu bewegen. In Fig. 2 ist die Bewegungseinheit 12 eine Dreheinrichtung mit zumindest einer Drehachse 8 zur relativen Drehung von Werkstück oder Baugruppe 2 und Lasereinrichtung 5 ist. Die Dreheinrichtung umfasst zwei seitlich des Werkstückes 2 angreifende Klemmen, um das Werkstück 2 während der Drehbewegung um die Drehachse 8 zu fixieren. Die Drehachse 8 der Dreheinrichtung steht quer, vorzugsweise im Wesentlichen normal, zur Förderrichtung 13 der Fördereinrichtung 3 im Bereich der Härtestation 18.

Mit dieser Anordnung kann nun ein Kompensationsschritt durchgeführt werden, bei dem zur Kompensation des durch die Laserhärtung bewirkten oder zu erwartenden Verzuges die Applikation zumindest einer weiteren Laserhärtespur 7 an anderer Stelle des Werkstückes oder der Baugruppe 2 erfolgt. Dieser Sachverhalt wird in den Fig. 3 und 4 schematisch dargestellt.

Vorzugsweise erfolgt die Applikation zumindest einer Laserhärtespur 6 gemäß dem Härteschritt und die Applikation der zumindest einen weiteren Laserhärtespur 7 gemäß dem Kompensationsschritt jeweils durch Bewegen eines Laserspots entlang einer vorgegebenen Spur erfolgt, wobei die Bewegungsrichtung des Laserspots (Pfeile in Fig. 4) während des Härteschrittes und die Bewegungsrichtung des Laserspots während des Kompensationsschrittes gegenläufig sind (oberer Teil der Fig. 4). Alternativ können die Bewegungsrichtungen auch gleichsinnig sein (unterer Teil der Fig. 4). Die Rückstellung der Lasereinrichtung 5 kann erfolgen, während das Werkstück oder die Baugruppe 2 in eine andere Position bewegt bzw. gedreht werden. Das Werkstück oder die Baugruppe 2 und die Lasereinrichtung 5 werden hier zwischen dem Härteschritt und dem Kompensationsschritt relativ zueinander bewegt, vorzugsweise um zumindest eine Drehachse 8 gedreht.

Die Applikation mehrerer Kompensationshärtespuren 7 an verschiedenen Stellen des Werkstückes 2 ist ebenfalls möglich. Dazu zeigt Fig. 3 ein Beispiel, wobei hier das Werkstück 2 im Querschnitt und die Laserstrahlen als gerade Pfeile dargestellt sind. Der Härteschritt und der Kompensationsschritt werden in derselben Arbeitsstation 4, d.h. in der Härtestation 18, durchgeführt.

Die Härtestation 18 kann auch eine ein- oder mehrteilige Schutzabdeckung 11 für den Arbeitsbereich umfassen, wobei vorzugsweise die Schutzabdeckung 11 oder ein Teil der Schutzabdeckung 11 bewegbar ist.

Die Station vor der Härtestation 18 ist eine Aufnahmestation 17 zur Aufnahme der Werkstücke oder Baugruppen. Die der Härtestation 18 nachfolgenden Arbeitsstationen können eine mechanische Bearbeitungsstation 19, insbesondere zum Ablängen und/oder Fräsen des Werkstückes oder der Baugruppe 2, eine Schweißstation 20, eine Prüfstation 21, eine Beölungsstation 22 und/oder eine Ausgabestation 23 umfassen. Weiters wären auch Montagestationen, Beschriftungs- und/oder Reinigungsstationen in der Abfolge der Fertigungsanlage 1 denkbar.

Gemäß dem In-Line Verfahren zur Fertigung von Werkstücken oder Baugruppen 2 durchlaufen nun Werkstücke oder Baugruppen 2 mittels einer Fördereinrichtung 3 mehrere aufeinanderfolgende Arbeitsstationen 4. In einer der Arbeitsstationen 4, der Härtestation 18 wird nun ein Härteschritt durchgeführt, bei dem zumindest ein Bereich des Werkstückes oder der Baugruppe 2 mittels der Lasereinrichtung 5, insbesondere eines Lasers mit programmierbarer Fokussieroptik (PFO) oder eines Linienlasers, durch Applikation zumindest einer Laserhärtespur 6 gehärtet wird.

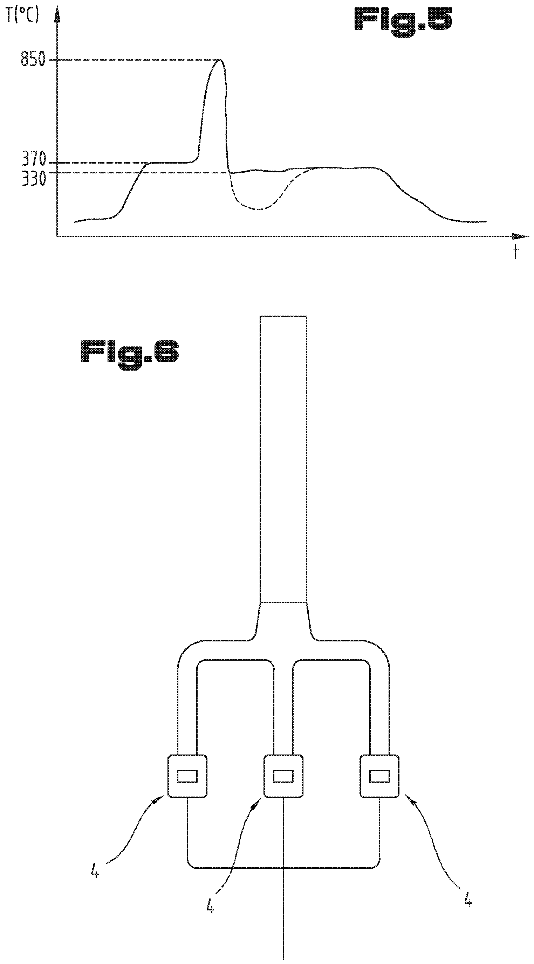

Während und/oder nach der Applikation der zumindest einen Laserhärtespur 6 kann die Gebrauchshärte eines Bereiches des Werkstückes oder der Baugruppe 2 durch Steuerung der Lasereinrichtung 5 eingestellt wird. Dies kann insbesondere durch Steuerung der Laserleistung erfolgen. Fig. 5 zeigt dazu den Temperaturverlauf. Der Härteschritt wird durch den schmalen Peak (bis 850°C) dargestellt, während der Vorgang des Anlassens durch das nachfolgende Plateau (etwa 330°C) beschrieben wird. In dieser Phase ist wird die Laserleistung reduziert. In der Darstellung der Fig. 5 ist auch eine Vorwärmphase vorgesehen. Dies ist jedenfalls optional.

Die Gebrauchshärte eines Bereiches des Werkstückes oder der Baugruppe 2 kann auch durch einen gesonderten Anlassschritt eingestellt werden, wobei vorzugsweise der Anlassschritt und der vorhergehende Härteschritt in derselben Arbeitsstation, der Härtestation 18, durchgeführt werden.

Die Applikation zumindest einer Laserhärtespur 6, 7 erfolgt mittels einer Steuereinrichtung 9 (Fig. 1) unter Anwendung von Prozessparametern, insbesondere Vorschubgeschwindigkeit des Laserstrahles, Laserleistung, Abstand zwischen Laserbearbeitungskopf und Werkstück oder Baugruppe 2, Winkel, unter dem der Laserstrahl auf das Werkstück oder die Baugruppe trifft. Dabei werden die Prozessparameter vorzugsweise in Echtzeit und/oder in Abhängigkeit von Sensordaten geregelt, die durch zumindest einen Sensor 10 in der betreffenden Arbeitsstation 4 aufgenommen werden. Ein Sensor 10, der den Arbeitsbereich überwacht, ist in Fig. 2 schematisch dargestellt. Als Sensoren können Temperatursensoren, optische Sensoren insbesondere zur Feststellung des Ausmaßes des Härtungs-Verzuges, Druck-, Gas-, und/oder Durchflusssensoren zum Einsatz kommen.

Fig. 6 zeigt schließlich, dass ein In-Line Verfahren auch mehrere parallele verlaufende Linien umfassen kann, die an einem bestimmten Punkt des Prozesses zusammengeführt werden können. So kann jede der parallelen Linien eine Arbeitsstation 4, insbesondere eine Härtestation umfassen. Die solcherart gehärteten Werkstücke werden im weiteren Prozess vereint und entweder gemeinsam weiter verarbeitet und/oder zu einer Baugruppe zusammengefügt (Montagestation). Durch diese Verschachtelung des Prozesses können die Taktzeiten weiter reduziert werden, die Fertigungskosten ebenfalls reduziert werden.

### Bezugszeichenaufstellung

- 1: Fertigungsanlage
- 2: Werkstück oder Baugruppe
- 3: Fördereinrichtung
- 4: Arbeitsstation
- 5: Lasereinrichtung
- 6: Laserhärtespur
- 7: kompensierende Laserhärtespur
- 8: Drehachse
- 9: Steuereinrichtung
- 10: Sensor
- 11: Schutzabdeckung
- 12: Bewegungseinheit
- 13: Förderrichtung
- 14: Bewegbare Umlenkspiegel
- 15: Laserquelle
- 16: Laserstrahl
- 17: Eingabestation
- 18: Härtestation
- 19: Mechanische Bearbeitungsstation
- 20: Schweißstation
- 21: Prüfstation
- 22: Beölungsstation
- 23: Ausgabestation

## Patentansprüche

1. In-Line Verfahren zur Fertigung von Werkstücken oder Baugruppen (2), bei dem Werkstücke oder Baugruppen (2) mittels einer Fördereinrichtung (3) mehrere aufeinanderfolgende Arbeitsstationen (4) durchlaufen, mit einem in einer der Arbeitsstationen (4) durchgeführten Härteschritt, bei dem zumindest ein Bereich des Werkstückes oder der Baugruppe (2) mittels einer Lasereinrichtung (5), insbesondere eines Lasers mit programmierbarer Fokussieroptik (PFO) oder eines Linienlasers, durch Applikation zumindest einer Laserhärtespur (6) gehärtet wird, wobei das In-Line Verfahren **gekennzeichnet ist durch** einen Kompensationsschritt, bei dem zur Kompensation des durch die Laserhärtung bewirkten oder zu erwartenden Verzuges die Applikation zumindest einer weiteren Laserhärtespur (7) an anderer Stelle des Werkstückes oder der Baugruppe (2) erfolgt, wobei der Härteschritt und der Kompensationsschritt in derselben Arbeitsstation (4) durchgeführt werden.

2. In-Line Verfahren nach Anspruch 1, **dadurch gekennzeichnet, dass** während und/oder nach der Applikation der zumindest einen Laserhärtespur (6) die Gebrauchshärte eines Bereiches des Werkstückes oder der Baugruppe (2) durch Steuerung der Lasereinrichtung (5) eingestellt wird.

3. In-Line Verfahren nach Anspruch 2, **dadurch gekennzeichnet, dass** die Gebrauchshärte eines Bereiches des Werkstückes oder der Baugruppe (2) durch einen gesonderten Anlassschritt eingestellt wird, wobei der Anlassschritt und der Härteschritt in derselben Arbeitsstation (4) durchgeführt werden.

4. In-Line Verfahren nach einem der vorhergehenden Ansprüche, **dadurch gekennzeichnet, dass** die Applikation zumindest einer Laserhärtespur (6) gemäß dem Härteschritt und die Applikation der zumindest einen weiteren Laserhärtespur (7) gemäß dem Kompensationsschritt jeweils durch Bewegen eines Laserspots entlang einer vorgegebenen Spur erfolgt, wobei die Bewegungsrichtung des Laserspots während des Härteschrittes und die Bewegungsrichtung des Laserspots während des Kompensationsschrittes gegenläufig sind.

5. In-Line Verfahren nach einem der vorhergehenden Ansprüche, **dadurch gekennzeichnet, dass** das Werkstück oder die Baugruppe (2) und die Lasereinrichtung (5) zwischen dem Härteschritt und dem Kompensationsschritt relativ zueinander bewegt, vorzugsweise um zumindest eine Drehachse (8) gedreht, werden.

6. In-Line Verfahren nach einem der vorhergehenden Ansprüche, **dadurch gekennzeichnet, dass** in einer der die Laserhärtung durchführenden Arbeitsstation (4) nachfolgenden Arbeitsstation eine mechanische Bearbeitung des Werkstückes oder der Baugruppe (2), insbesondere Ablängen und/oder Fräsen, durchgeführt wird.

7. In-Line Verfahren nach einem der vorhergehenden Ansprüche, **dadurch gekennzeichnet, dass** die Applikation zumindest einer Laserhärtespur (6, 7) durch eine Steuereinrichtung (9) unter Anwendung von Prozessparametern, insbesondere Vorschubgeschwindigkeit des Laserstrahles, Laserleistung, Abstand zwischen Laserbearbeitungskopf und Werkstück oder Baugruppe (2), Winkel, unter dem der Laserstrahl auf das Werkstück oder die Baugruppe trifft, erfolgt, wobei vorzugsweise die Prozessparameter in Echtzeit geregelt werden.

8. In-Line Verfahren nach Anspruch 7, **dadurch gekennzeichnet, dass** die Prozessparameter in Abhängigkeit von Sensordaten geregelt werden, die durch zumindest einen Sensor (10) in der Arbeitsstation (4) aufgenommen werden.

9. In-Line Verfahren nach einem der vorhergehenden Ansprüche, **dadurch gekennzeichnet, dass** der Härteschritt und/oder der Anlassschritt und/oder der Kompensationsschritt unter einer ein- oder mehrteiligen Schutzabdeckung (11) durchgeführt wird/werden, wobei vorzugsweise die Schutzabdeckung (11) oder ein Teil der Schutzabdeckung (11) bewegbar ist.

10. In-Line Fertigungsanlage (1) zur Fertigung von Werkstücken oder Baugruppen (2), mit einer Steuereinrichtung (9), mehreren aufeinanderfolgenden Arbeitsstationen (4) und einer Fördereinrichtung (3), mit der die Werkstücke oder Baugruppen (2) zwischen den einzelnen Arbeitsstationen (4) förderbar sind, wobei eine Arbeitsstation (4) eine Härtestation ist und eine Lasereinrichtung (5) umfasst, die dazu eingerichtet ist, zumindest einen Bereich eines/einer in der Arbeitsstation befindlichen Werkstückes oder Baugruppe (2) durch Applikation zumindest einer Laserhärtespur (6) zu härten, **dadurch gekennzeichnet, dass** die In-Line Fertigungsanlage (1) ausgebildet ist, um in derselben Arbeitsstation (4) einen Kompensationsschritt durchzuführen, bei dem zur Kompensation des durch die Laserhärtung bewirkten oder zu erwartenden Verzuges die Applikation zumindest einer weiteren Laserhärtespur (7) an anderer Stelle des Werkstückes oder der Baugruppe (2) erfolgt, und dass die Steuereinrichtung (9) zur Durchführung eines In-Line Verfahrens nach einem der Ansprüche 1 bis 9 eingerichtet ist.

11. In-Line Fertigungsanlage nach Anspruch 10, **dadurch gekennzeichnet, dass** die Härtestation (4) eine Bewegungseinheit (12) umfasst, die ausgebildet ist, das Werkstück oder die Baugruppe (2) und die Lasereinrichtung (5) relativ zueinander zu bewegen, wobei vorzugsweise die Bewegungseinheit (12) eine Dreheinrichtung mit zumindest einer Drehachse (8) zur relativen Drehung von Werkstück oder Baugruppe (2) und Lasereinrichtung (5) ist.

12. In-Line Fertigungsanlage nach Anspruch 11, **dadurch gekennzeichnet, dass** die Drehachse (8) der Dreheinrichtung quer, vorzugsweise im Wesentlichen normal, zur Förderrichtung der Fördereinrichtung (3) im Bereich der Härtestation (4) steht.

13. In-Line Fertigungsanlage nach einem der Ansprüche 10 bis 12, **dadurch gekennzeichnet, dass** die Härtestation eine ein- oder mehrteilige Schutzabdeckung (11) für den Arbeitsbereich umfasst, wobei vorzugsweise die Schutzabdeckung (11) oder ein Teil der Schutzabdeckung (11) bewegbar ist.

14. In-Line Fertigungsanlage nach einem der Ansprüche 10 bis 13, **dadurch gekennzeichnet, dass** eine der Härtestation nachfolgende Arbeitsstation eine mechanische Bearbeitungsstation, insbesondere zum Ablängen und/oder Fräsen des Werkstückes oder der Baugruppe (2), ist.

15. In-Line Fertigungsanlage nach einem der Ansprüche 10 bis 14, **dadurch gekennzeichnet, dass** die der Härtestation nachfolgenden Arbeitsstationen eine Schweißstation und/oder einer Prüfstation und/oder eine Beschriftungsstation und/oder eine Montagestation und/oder eine Beölungsstation und/oder eine Ausgabestation umfassen.

## Claims

1. An in-line method for producing workpieces or assemblies (2), in which the workpieces or assemblies (2) pass through several successive workstations (4) by means of a conveyor device (3), with a hardening step, in which at least one region of the workpiece or assembly (2) is hardened by the application of at least one laser hardening trace (6) by means of a laser device (5), in particular a laser with programmable focusing optics (PFO) or a line laser, wherein the hardening step is carried out in one of the workstations (4), wherein the in-line method is **characterized by** a compensation step in which for compensating the warping caused by or to be expected to be caused by the laser hardening, the application of at least one further laser hardening trace (7) is performed at a different location of the workpiece or the assembly (2), wherein the hardening step and the compensation step are carried out in the same workstation (4).

2. The in-line method according to claim 1, **characterized in that** during and/or after the application of the at least one laser hardening trace (6), the working hardness of a region of the workpiece or of the assembly (2) is set by controlling the laser device (5).

3. The in-line method according to claim 2, **characterized in that** the working hardness of a region of the workpiece or of the assembly (2) is set through a separate tempering step, wherein the tempering step and the hardening step are carried out in the same workstation (4).

4. The in-line method according to one of the preceding claims, **characterized in that** the application of at least one laser hardening trace (6) according to the hardening step and the application of at least one further laser hardening trace (7) according to the compensation step is in each case carried out by moving a laser spot along a specified trace, wherein the direction of movement of the laser spot during the hardening step is opposite to the direction of movement of the laser spot during the compensation step.

5. The in-line method according to one of the preceding claims, **characterized in that** the workpiece or the assembly (2) and the laser device (5) are moved relative to one another, preferably rotated about at least one rotary axis (8), between the hardening step and the compensation step.

6. The in-line method according to one of the preceding claims, **characterized in that** in a workstation successive to the workstation (4) carrying out the laser hardening, a mechanical processing of the workpiece or of the assembly (2), in particular cutting to length and/or milling, is carried out.

7. The in-line method according to one of the preceding claims, **characterized in that** the application of at least one laser hardening trace (6, 7) is controlled by a control unit (9) by applying process parameters, in particular feed rate of the laser beam, laser power, distance between laser processing head and workpiece or assembly (2), angle, under which the laser beam falls on the workpiece or the assembly, wherein preferably the process parameters are regulated in real time.

8. The in-line method according to claim 7, **characterized in that** the process parameters are regulated depending upon sensor data, which is recorded by at least one sensor (10) in the workstation (4).

9. The in-line method according to one of the preceding claims, **characterized in that** the hardening step and/or the tempering step and/or the compensation step is/are carried out under a single-part or multi-part protective cover (11), wherein preferably the protective cover (11) or a part of the protective cover (11) is movable.

10. An in-line production plant (1) for producing workpieces or assemblies (2), with a control unit (9), several successive workstations (4) and a conveyor device (3), by means of which the workpieces or assemblies (2) can be conveyed between the individual workstations (4), wherein one workstation (4) is a hardening station and comprises a laser device (5), which is set up for hardening at least one region of a workpiece or of an assembly (2) located in the workstation by applying at least one laser hardening trace (6), **characterized in that** the in-line production plant (1) is designed for carrying out - in the same workstation (4) - a compensation step, in which for compensating the warping caused by or to be expected to be caused by the laser hardening, the application of at least one further laser hardening trace (7) is performed at a different location of the workpiece or the assembly (2), and that the control unit (9) is set up for carrying out an in-line method according to one of claims 1 to 9.

11. The in-line production plant according to claim 10, **characterized in that** the hardening station (4) has a movement unit (12), which is designed to move the workpiece or the assembly (2) and the laser device (5) relative to one another, wherein preferably the movement unit (12) is a rotating device with at least one rotary axis (8) for relative rotation of the workpiece or assembly (2) and the laser device (5).

12. The in-line production plant according to claim 11, **characterized in that** the rotary axis (8) of the rotating device is transverse, preferably essentially perpendicular, to the conveying direction of the conveyor device (3) in the area of the hardening station (4).

13. The in-line production plant according to one of claims 10 to 12, **characterized in that** the hardening station includes a single-part or multi-part protective cover (11) for the work space, wherein preferably the protective cover (11) or a part of the protective cover (11) is movable.

14. The in-line production plant according to one of claims 10 to 13, **characterized in that** a workstation successive to the hardening station is a mechanical processing station, particularly for cutting to length and/or milling the workpiece or the assembly (2).

15. The in-line production plant according to one of the claims 10 to 14, **characterized in that** the workstations successive to the hardening station comprise a welding station and/or a testing station and/or a labeling station and/or a mounting station and/or an oiling station and/or an output station.

## Revendications

1. Procédé en ligne pour la fabrication de pièces ou de sous-ensembles (2), dans lequel les pièces ou sous-ensembles (2) traversent, au moyen d'un dispositif de convoyage (3), plusieurs postes de travail (4) successifs, avec une étape de durcissement effectuée dans un des postes de travail (4), dans laquelle au moins une partie de la pièce ou du sous-ensemble (2) est durci au moyen d'un dispositif laser (5), plus particulièrement d'un laser avec une optique de focalisation programmable (PFO) ou d'un laser linéaire, par l'application d'au moins une piste de durcissement au laser (6), le procédé en ligne étant **caractérisé par** une étape de compensation dans laquelle, pour la compensation d'une déformation provoquée par le durcissement au laser ou prévisible, l'application d'au moins une autre piste de durcissement au laser (7) a lieu à un autre endroit de la pièce ou du sous-ensemble (2), l'étape de durcissement et l'étape de compensation étant exécutées dans le même poste de travail (4).

2. Procédé en ligne selon la revendication 1, **caractérisé en ce que**, pendant et/ou après l'application de l'au moins une piste de durcissement au laser (6), la dureté d'utilisation d'une partie de la pièce ou du sous-ensemble (2) est réglée grâce au contrôle du dispositif laser (5).

3. Procédé en ligne selon la revendication 2, **caractérisé en ce que** la dureté d'utilisation d'une partie de la pièce ou du sous-ensemble (2) est réglée grâce à une étape de revenu, l'étape de revenu et l'étape de durcissement étant exécutées dans le même poste de travail (4).

4. Procédé en ligne selon l'une des revendications précédentes, **caractérisé en ce que** l'application d'au moins une piste de durcissement au laser (6) a lieu selon l'étape de durcissement et l'application de l'au moins une autre piste de durcissement au laser (7) a lieu selon l'étape de compensation, respectivement par le déplacement d'un point laser le long d'une piste prédéterminée, la direction de déplacement du point laser pendant l'étape de durcissement et la direction de déplacement du point laser pendant l'étape de compensation étant à contre-sens.

5. Procédé en ligne selon l'une des revendications précédentes, **caractérisé en ce que** la pièce ou le sous-ensemble (2) et le dispositif laser (5) sont déplacés l'un par rapport à l'autre entre l'étape de durcissement et l'étape de compensation, de préférence mis en rotation autour d'au moins un axe de rotation (8).

6. Procédé en ligne selon l'une des revendications précédentes, **caractérisé en ce que**, dans un poste de travail suivant le poste de travail (4) exécutant le durcissement au laser, un usinage mécanique de la pièce ou du sous-ensemble (2), plus particulièrement un découpage et/ou un fraisage, est effectué.

7. Procédé en ligne selon l'une des revendications précédentes, **caractérisé en ce que** l'application d'au moins une piste de durcissement au laser (6, 7) a lieu à l'aide d'un dispositif de commande (9) grâce à des paramètres de process, plus particulièrement une vitesse d'avance du rayon laser, une puissance de laser, une distance entre la tête d'usinage au laser et la pièce ou le sous-ensemble (2), un angle avec lequel le rayon laser arrive sur la pièce ou le sous-ensemble, de préférence les paramètres de process étant régulés en temps réel.

8. Procédé en ligne selon la revendication 7, **caractérisé en ce que** les paramètres de process sont régulés en fonction de données de capteurs qui sont captées par au moins un capteur (10) dans le poste de travail (4).

9. Procédé en ligne selon l'une des revendications précédentes, **caractérisé en ce que** l'étape de durcissement et/ou l'étape de revenu et/ou l'étape de compensation est/sont exécutée(s) sous un couvercle de protection en une ou plusieurs parties (11), de préférence le couvercle de protection (11) ou une partie du couvercle de protection (11) étant mobile.

10. Installation de fabrication en ligne (1) pour la fabrication de pièces ou de sous-ensembles (2), avec un dispositif de commande (9), plusieurs postes de travail (4) successifs et un dispositif de convoyage (3), avec lequel les pièces et les sous-ensembles (2) peuvent être convoyés entre les différents postes de travail (4), un poste de travail (4) étant un poste de durcissement et comprenant un dispositif laser (5), qui est conçu pour durcir au moins une partie d'une pièce ou d'un sous-ensemble (2) se trouvant dans le poste de travail par l'application d'au moins une piste de durcissement au laser (6), **caractérisée en ce que** l'installation de fabrication en ligne (1) est conçue pour exécuter, dans le même poste de travail (4), une étape de compensation, dans laquelle, pour la compensation de la déformation provoquée par le durcissement au laser ou prévisible, l'application d'au moins une autre piste de durcissement au laser (7) est effectuée à un autre endroit de la pièce ou du sous-ensemble (2) et **en ce que** le dispositif de commande (9) est conçu pour l'exécution d'un procédé en ligne selon l'une des revendications 1 à 9.

11. Installation de fabrication en ligne selon la revendication 10, **caractérisée en ce que** le poste de durcissement (4) comprend une unité de déplacement (12) qui est conçue pour déplacer la pièce ou le sous-ensemble (2) et le dispositif laser (5) l'un par rapport à l'autre, de préférence l'unité de déplacement (12) étant un dispositif de rotation avec au moins un axe de rotation (8) pour la rotation relative de la pièce ou du sous-ensemble (2) et du dispositif laser (5).

12. Installation de fabrication en ligne selon la revendication 11, **caractérisée en ce que** l'axe de rotation (8) du dispositif de rotation est transversal, de préférence globalement normal, par rapport à la direction de convoyage du dispositif de convoyage (3) au niveau du poste de durcissement (4).

13. Installation de fabrication en ligne selon l'une des revendications 10 à 12, **caractérisée en ce que** le poste de durcissement comprend un couvercle de protection en une ou plusieurs parties (11) pour la zone de travail, de préférence le couvercle de protection (11) ou une partie du couvercle de protection (11) étant mobile.

14. Installation de fabrication en ligne selon l'une des revendications 10 à 13, **caractérisée en ce qu'**un poste de travail suivant le poste de durcissement est un poste d'usinage mécanique, plus particulièrement de découpe et/ou de fraisage de la pièce ou du sous-ensemble (2).

15. Installation de fabrication en ligne selon l'une des revendications 10 à 14, **caractérisée en ce que** les postes de travail suivant le poste de durcissement comprennent un poste de soudure et/ou un poste de contrôle et/ou un poste de marquage et/ou un poste de montage et/ou un poste de brasage et/ou un poste de sortie.
